# EUROPEAN PATENT SPECIFICATION

(11) **EP 4 269 420 B1**
(45) Date of publication and mention of the grant of the patent: **22.04.2026**
(21) Application number: 23168638.7
(22) Date of filing: 19.04.2023
(51) Int. Cl.: C07F 9/09

(54) **METHOD FOR THE PREPARATION OF PHOSPHORIC ACID MONOESTERS AND DIESTERS FROM ALCOHOLS**
VERFAHREN ZUR HERSTELLUNG VON PHOSPHORSÄUREMONOESTERN UND -DIESTERN AUS ALKOHOLEN
PROCÉDÉ DE PRÉPARATION DE MONOESTERS ET DIESTERS D'ACIDE PHOSPHORIQUE À PARTIR D'ALCOOLS

(30) Priority: 26.04.2022 PL 44102322
(43) Date of publication of application: 01.11.2023
(73) Proprietor: PCC EXOL S.A., 56-120 Brzeg Dolny (PL)
(72) Inventor: Frackowiak, Renata, 51-211 Wroclaw (PL); Slowikowska, Monika, 54-129 Wroclaw (PL); Lewandowska, Patrycja, 51-114 Wroclaw (PL); Kolodziej, Marta, 32-626 Jawiszowice (PL)
(74) Representative: JWP Patent & Trademark Attorneys

(56) References cited:
- CN-A- 112 409 403

## Description

The invention relates to a method for the preparation of phosphoric acid mono- and diesters by the reaction of alcohols with phosphorus pentoxide using high-performance and combined variable mixing at the individual stages of the process.

The technology of producing a mixture of phosphoric acid mono- and diesters from fatty alcohols and the alkoxylated derivatives thereof is well known in the prior art. A typical process involves the reaction of a primary alcohol with phosphorus pentoxide, and the reaction is carried out at the temperature of 25-110°C. The first step of the synthesis involves dosing free-flowing phosphorus pentoxide into a liquid raw material, i.e. alcohol such as alkyl alcohol, alkyl-aryl alcohol, alkyl ether alcohol, alkyl-aryl ether alcohol or derivatives thereof. The method for the preparation of phosphate esters comprises two steps: the step of dosing phosphorus pentoxide into the raw material and the step of esterification and standardization, wherein the polymeric forms of phosphoric acid esters are hydrolyzed following the addition of water.

The solution according to GB 791977 A specifies the optimal molar ratio of P₂O₅ to alcohol as 1 to 3 mol. In this method, phosphorus pentoxide is gradually dosed into the reaction mixture at the temperature of 40-50°C, and after this dosing is completed, the process is further carried out at the temperature of 90-110°C.

US 3,346,670 A discloses the addition of a mineral acid, such as a phosphinic acid in the amount of 0.1-0.8% of the reaction mass, which positively affects the color of the phosphoric acid esters produced.

A method, wherein P₂O₅ and alcohol are used at the molar ratio of 1 to 2-4.5 mol, is known from US 3,004,057 A. The reaction is carried out with the addition of phosphinic acid, at the temperature ranging from room temperature to 110°C.

US 4126650 A and US 3318982 A discloses the addition of hydrogen peroxide at the final step of the synthesis (the standardization step) to improve the color of the resulting products.

GB 1311995 A discloses the optimal molar ratio of P₂O₅/alcohol to be 1 to 2-4.5 mol. The temperature of the conducted process is within the range of 25-110°C. In the final step, water is added to the reaction mixture in order to hydrolyze the unfavorable polymeric ester derivatives.

CN 112409403 a discloses a solvent-free method for synthesizing colorless phosphoric acid esters. Reaction is conducted in the tank reactor equipped with the feeding box with a number of small holes. Phosphorus pentoxide which is added to the rotatory feeding box overflows from the small holes through the rotation of the feeding box body and enters to the reactor tank to react with the organic alcohol. Under the rotation speed, the amount of phosphorus pentoxide added to the reaction tank per unit time can be controlled to ensure the stability of the reaction and the product quality is more balanced. However, the patent does not solve a problem with phosphorus pentoxide agglomeration on a production scale, it only shows an interesting solution used in the laboratory. A significant challenge in the method for the preparation of phosphoric acid esters from alcohols and phosphorus pentoxide is the production of lightcolored esters. Undissolved phosphorus pentoxide darkens due to temperature, leading to increased coloration in the final product.An additional problem is the fact that phosphorus pentoxide, which is highly hygroscopic, tends to aggregate, which reduces the efficiency of the esterification reaction (hinders the reaction by extending its time and negatively affects the purity of the resulting products). Equally undesirable is the effect of burning aggregated phosphorus pentoxide clumps at a higher temperature, which translates into a darker color of the product. Additionally, burning aggregated phosphorus pentoxide clumps at higher temperatures further darkens the product. Moreover, the resulting phosphorus pentoxide aggregates coat reactor elements such as the shaft, stirrer arms, side walls, and bottom, necessitating increased resources for cleaning (water and time), thus escalating the overall process costs and diminishing its efficiency. The object of the present invention is to eliminate said disadvantages and imperfections in the method for the preparation of phosphoric acid esters without the additional need to use specialized rotatory feeding boxes by using high-performance mixing which allows for immediate distribution of the reagents in the reaction mixture with the production of high purity products in a short time.

The object of the invention is the method for the preparation of phosphoric acid mono- and diesters by the reaction of alcohols with phosphorus pentoxide, wherein, in the first stage, phosphorus pentoxide is added to the reactor containing alcohol, and, in the second stage, the reaction mixture is heated and the standardization process is carried out,
wherein:
the alcohol is selected from the group of alkyl alcohols, alkyl-aryl alcohols, alkyl ether alcohols or alkyl-aryl ether alcohols of the general formula (1): 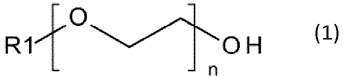
wherein:
   **R1** - is a linear and/or branched hydrocarbon chain, optionally comprising an aromatic ring, with an average number of carbon atoms from 4 to 30;
   **n** - is the average amount of ethylene oxide moles ranging from 0 to 18 moles; and
   phosphoric acid mono- and diesters are compounds of the general formulae (2) and/or (3): 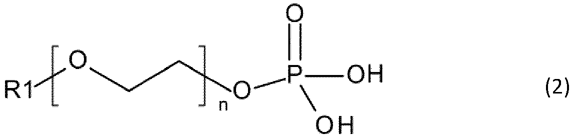 and/or 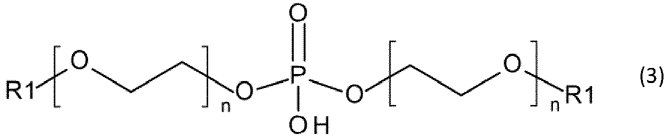
   wherein:
      **R1** - is a linear and/or branched hydrocarbon chain, optionally comprising an aromatic ring, with an average number of carbon atoms from 4 to 30;
      **n** - is the average amount of ethylene oxide moles ranging from 0 to 18 moles.
   characterized in that the method of the invention is carried out in a mixing reactor equipped with a frame stirrer with scrapers, a paddle stirrer and an additional homogenizing stirrer, the method wherein, in the first step, the frame stirrer, the paddle stirrer and the homogenizing stirrer operate at different frequencies with respect to one another; and, in the second step, the frame stirrer, the paddle stirrer and the homogenizing stirrer operate at different frequencies with respect to one another and with different frequencies than in the first step.

Preferably, alcohol is used in the amount corresponding to 75-90% of the maximum reactor charge.

It is preferable to additionally heat the mixture to the temperature of 50°C after introducing alcohol into the reactor.

In order to increase the efficiency of the process, it is preferable to add phosphinic acid in the amount of 0.3 to 0.5% of the maximum reactor charge before the addition of phosphorus pentoxide.

Preferably, in the first step, phosphorus pentoxide is added within 1 to 2 hours, more preferably within 1 hour.

Preferably, the amount of added phosphorus pentoxide in the molar ratio to alcohol is 1:3.

It is preferable that upon the addition of phosphorus pentoxide the reaction mixture is heated at the temperature of 80°C for 2.5 to 4 hours, and most preferably for 2.5 hours.

Preferably, in the first step, the frame stirrer rotates at the frequency of 2-10 rpm, the paddle stirrer rotates at the frequency of 30-42 rpm, and the homogenizing stirrer operates at the frequency of 1500-3500 rpm.

Preferably, in the second step, demineralized water and hydrogen peroxide are added, each in the amount of 0.3 to 0.5% of the reactor charge.

It is particularly advantageous to change the operating frequency of the stirrers in the second step, so that the frame stirrer rotates at the frequency of 2-23 rpm, the paddle stirrer rotates at the frequency of 30-42 rpm, and the homogenizing stirrer operates at the frequency of 800-1500 rpm.

Preferably, in the second step, following the addition of water and hydrogen peroxide, the reaction mixture is heated at the temperature of 80°C for 30 min.

Preferably, alcohols with the CAS number 68439-50-9 or 104-76-7 or 99734-09-5 are used in the reaction of alcohols.

According to the invention, the method for the preparation of phosphoric acid mono- and diesters is characterized in that phosphoric acid esters with a Gardner scale color index < 2 are produced.

The advantage of the present invention, due to the use of high-performance mixing that allows for the immediate distribution of the reagents in the reaction mixture, is the improvement of a number of parameters. The use of combined variable mixing at individual process steps allows, above all, to avoid the aggregation of undissolved phosphorus pentoxide, thus enabling its faster dosing, which also reduces the time of the entire process.

While homogenizers are known in the prior art, they are used only in food, cosmetics and pharmaceutical industries to obtain physical mixtures of high viscosity. Using a homogenizer as a reactor to conduct chemical syntheses is an unconventional approach, constituting an element of innovation and non-obviousness of the present invention. The advantage of the present invention is also the reduced amount of the by-products formed, and thus the formation of phosphoric acid mono- and diesters of increased purity manifested by lighter coloring.

Another advantage of the method according to the present invention is also easier reactor cleaning after the process has been completed, which translates into lower costs of conducting the esterification reaction.

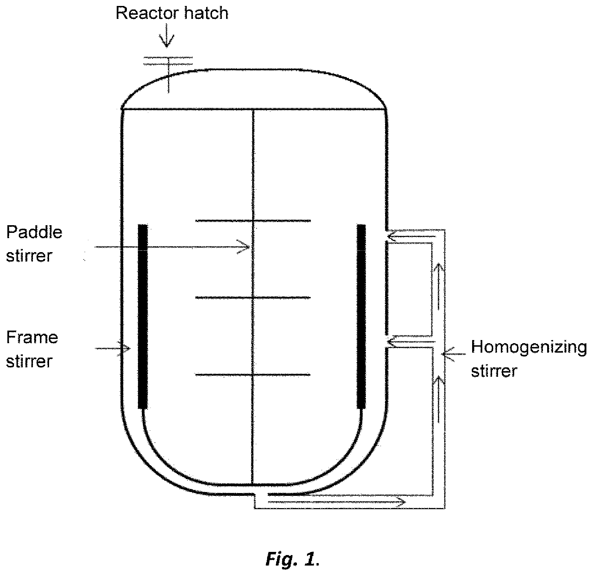

**Fig. 1** shows a simplified diagram of a mixing reactor in which the process of producing phosphoric acid esters is carried out, wherein the arrows indicate the direction of the reaction mixture trafficking.

The following examples are illustrative of the present invention and are not limiting.

### Example 1

| Table 1. Selected parameters of a phosphoric ester based on an ethoxylated alcohol C12-C14 (Laureth-4, CAS 68439-50-9) | |
|---|---|
| **Selected parameters (*measurement method*)** | **Product technical specification (PTS)** |
| External appearance at the temperature of (20÷25)°C (*visual inspection*) | clear liquid |
| Color on the Gardner scale at (20÷25)°C (*PN-EN ISO 4630-1: 2006)* | max 2 |
| Acid value (up to the second bend point), KOH mg/g | 150 - 180 |
| pH of a 10% solution (*PN*-*EN 1262:2004)* | 1.3 - 2.5 |
| Water, %(m/m) *(PN-ISO 760:2001)* | max 2 |

The process without the use of a homogenizing stirrer with the mixing parameters unchanged during the process was carried out as follows:
a) To a mixing reactor equipped with a frame stirrer with scrapers, a paddle stirrer and an additional homogenizing stirrer, ethoxylated alcohol C12-C14 (CAS 68439-50-9) was introduced in the amount corresponding to 75-90% of the maximum reactor charge of 2000 liters, and then the mixture was heated to 50°C.
b) The following stirrers were switched on:
   - the frame stirrer operating at a rotation frequency of 23 rpm
   - the paddle stirrer operating at a rotation frequency of 42 rpm
   - the homogenizing stirrer has not been switched on
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 2 hours.
e) The mixing parameters have not changed.
f) The temperature was raised to 80°C and the esterification process was carried out for 3 hours.
g) Demineralized water and hydrogen peroxide were added, each in the amount of 0.3-0.5% (m/m) of the charge and the heating was continued for one hour. The mixing parameters have not changed.
h) The reaction mass was cooled to 30°C, then the stirrers were switched off and the reactor was discharged.

Result: The resulting product deviated from the assumed expectations (Table 1) due to no homogenizing stirrer being switched on. The external appearance was determined as a viscous orange liquid and the color was established as 4 on the Gardner scale. The color measurement was performed by the spectrometric method according to the standard PN-EN ISO 4630-1: 2006. Due to the non-compliant appearance of the sample, the remaining parameters listed in the technical specification of the product have not been determined. Additionally, deposits of undissolved phosphorus pentoxide were observed on the parts of the frame stirrer extending above the surface of the reaction mass. Deposits of burnt phosphorus pentoxide at the bottom of the reactor were also visible. Because part of the phosphorus pentoxide was not available for esterification, the resulting product comprised a high unreacted alcohol content. It was decided to use a homogenizing stirrer in the next synthesis and reduce the rotation frequency of the frame stirrer during the phosphorus pentoxide dosing step. This should prevent the aggregation of phosphorus pentoxide and reduce the likelihood of covering the protruding parts of the stirrer charged with P₂O₅ from above.

### Example 2

The process involving the use of a homogenizing stirrer and with the mixing parameters unchanged during the process was carried out as follows:
a) To a mixing reactor equipped with a frame stirrer with scrapers, a paddle stirrer and an additional homogenizing stirrer, ethoxylated alcohol C12-C14 (CAS 68439-50-9) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 1000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 2 hours.
e) The mixing parameters have not changed.
f) The temperature was raised to 80°C and the esterification process was carried out for 3 hours.
g) Demineralized water and hydrogen peroxide were added, each in the amount of 0.3-0.5% (m/m) of the charge and the heating was continued for one hour. The mixing parameters have not changed.
h) The reaction mass was cooled to 30°C, then the stirrers were switched off and the reactor was discharged.

Result: The resulting product deviated from the assumed expectations (Table 1). The external appearance was determined as a viscous orange liquid with visible black particles. The color could not be determined due to the heterogeneous form of the product. Due to the non-compliant appearance of the sample, the remaining parameters listed in the technical specification of the product have not been determined. The protruding elements of the frame stirrer were not substantially covered with the dosed phosphorus pentoxide, which means that the use of a lower rotation frequency of the frame stirrer is more preferred to prevent this phenomenon. There was also less formation of undissolved phosphorus pentoxide deposits observed at the bottom of the reactor. In the next synthesis, it was decided to use different mixing parameters at the phosphorus pentoxide dosing stage and at subsequent stages of the synthesis.

### Example 3

The process with the mixing parameters changed during the process without changing the rotation frequency of the homogenizing stirrer was carried out as follows:
a) To a mixing reactor equipped with a frame stirrer with scrapers, a paddle stirrer and an additional homogenizing stirrer, ethoxylated alcohol C12-C14 (CAS 68439-50-9) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 1000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 2 hours.
e) The operating parameters of the stirrers have been changed:
   - the frame stirrer operating at a rotation frequency of 23 rpm
   - the paddle stirrer operating at a rotation frequency of 42 rpm
   - the homogenizing stirrer at a rotation frequency of 1000 rpm
f) The temperature was raised to 80°C and the esterification process was carried out for 3 hours.
g) Demineralized water and hydrogen peroxide were added, each in the amount of 0.3-0.5% (m/m) of the charge and the heating was continued for one hour. The mixing parameters have not changed.
h) The reaction mass was cooled to 30°C, then the stirrers were switched off and the reactor was discharged.

Result: The resulting product still deviated from the assumed expectations (Table 1). The external appearance was determined as a viscous orange liquid with visible black particles. The color could not be determined due to the heterogeneous form of the product. Due to the non-compliant appearance of the sample, the remaining parameters listed in the technical specification of the product have not been determined. No significant deposits of undissolved phosphorus pentoxide on the stirrer elements or at the bottom of the reactor were observed, which means that the selected operating parameters of the stirrers effectively prevent the aggregation of undissolved phosphorus pentoxide. However, the heterogeneous external appearance of the product and its color still remain a problem. It was decided to solve this problem by manipulating the rotation frequency of the homogenizing stirrer.

### Example 4

The process of the invention with the changed rotation frequency of the homogenizing stirrer was carried out as follows:
a) To a mixing reactor equipped with a frame stirrer with scrapers, a paddle stirrer and an additional homogenizing stirrer, ethoxylated alcohol C12-C14 (CAS 68439-50-9) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 3000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 2 hours.
e) The operating parameters of the stirrers have been changed:
   - the frame stirrer operating at a rotation frequency of 23 rpm
   - the paddle stirrer operating at a rotation frequency of 42 rpm
   - the homogenizing stirrer at a rotation frequency of 1000 rpm
f) The temperature was raised to 80°C and the esterification process was carried out for 3 hours.
g) Demineralized water and hydrogen peroxide were added, each in the amount of 0.3-0.5% (m/m) of the charge and the heating was continued for one hour. The mixing parameters have not changed.
h) The reaction mass was cooled to 30°C, then the stirrers were switched off and the reactor was discharged.

Result: The resulting product met the criteria outlined in the technical specifications of the product.(Table 1). The external appearance was determined as a clear liquid. The color was determined as 0.5 degrees on the Gardner scale. The color measurement was performed by the spectrometric method according to the standard PN-EN ISO 4630-1: 2006. No significant deposits of undissolved phosphorus pentoxide on the stirrer elements or at the bottom of the reactor were observed, which means that the selected operating parameters of the stirrers effectively prevent the aggregation of undissolved phosphorus pentoxide and significantly improve the solubility of phosphorus pentoxide in the reaction mass. In the subsequent synthesis, the shortening of dosage, esterification and standardization times was tested.

### Example 5

The process of the invention with a shortened dosing, esterification and standardization times was carried out as follows:
a) To a mixing reactor equipped with a frame stirrer with scrapers, a paddle stirrer and an additional homogenizing stirrer, ethoxylated alcohol C12-C14 (CAS 68439-50-9) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 3000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 1 hour.
e) The operating parameters of the stirrers have been changed:
   - the frame stirrer operating at a rotation frequency of 23 rpm
   - the paddle stirrer operating at a rotation frequency of 42 rpm
   - the homogenizing stirrer at a rotation frequency of 1000 rpm
f) The temperature was raised to 80°C and the esterification process was carried out for 2 hours.
g) Demineralized water and hydrogen peroxide were added, each in the amount of 0.3-0.5% (m/m) of the charge and the heating was continued for **30 minutes.** The mixing parameters have not changed.
h) The reaction mass was cooled to 30°C, then the stirrers were switched off and the reactor was discharged.

Result: The resulting product met the criteria outlined in the technical specifications of the The resulting product met the criteria outlined in the technical specifications of the products (Table 1). The external appearance was determined as a clear liquid and the color was established as 0.5 degrees on the Gardner scale. The color measurement was performed by the spectrometric method according to the standard PN-EN ISO 4630-1: 2006. Despite a 40% reduction in reaction time,, the manufactured product complied with all the assumed parameters. The use of efficient mixing allows not only to improve the properties of the resulting phosphorus ester, but also significantly reduce the time of the process.

### Example 6

| Table 2. Selected parameters of a phosphoric ester based on 2-ethylhexanol (C₈H₁₈O, CAS 104-76-7) | |
|---|---|
| **Selected parameters (*measurement method*)** | **Product technical specification (PTS)** |
| External appearance at the temperature of (20÷25)°C (*visual inspection*) | clear liquid |
| Color on the Gardner scale at (20÷25)°C (*PN-EN ISO 4630-1: 2006)* | max 4 |
| Acid value (up to the second bend point), KOH mg/g | 290 - 350 |
| Water, %(m/m) *(PN-ISO 760:2001)* | max 1 |

The following example illustrates the process of forming a phosphorus ester based on an alcohol other than the one in the previous examples. The 2-ethylhexanol (CAS 104-76-7) used in the example has a low molecular weight and is not alkoxylated. The optimized process is suitable for alcohols of the general formula (1). The process was carried out as follows:
a) To a mixing reactor equipped with a frame stirrer with scrapers, a paddle stirrer and an additional homogenizing stirrer, 2-ethylhexanol (CAS 104-76-7) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 3000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alcohol) was added to the reaction mass. Charging lasted 1 hour.
e) The operating parameters of the stirrers have been changed:
   - the frame stirrer operating at a rotation frequency of 23 rpm
   - the paddle stirrer operating at a rotation frequency of 42 rpm
   - the homogenizing stirrer at a rotation frequency of 1000 rpm
f) The temperature was raised to 80°C and the esterification process was carried out for 2 hours.
g) Demineralized water and hydrogen peroxide were added, each in the amount of 0.3-0.5% (m/m) of the charge and the heating was continued for 30 minutes. The mixing parameters have not changed.
h) The reaction mass was cooled to 30°C, then the stirrers were switched off and the reactor was discharged.

Result: The resulting product was in line with the expectations (Table 2). The external appearance was determined as a clear liquid, and the color was established as 0.3 degrees on the Gardner scale. The color measurement was performed by the spectrometric method according to the standard PN-EN ISO 4630-1: 2006. As with the use of ethoxylated alcohol C12-C14 (CAS 68439-50-9), a phosphorus ester based on an unalkoxylated alcohol of a lower molecular weight can be successfully produced by the method described herein.

### Example 7

| Table 3. Selected parameters of ethoxylated tristyrylphenol-based phosphoric ester (CAS 99734-09-5). | |
|---|---|
| **Selected parameters *(measurement method*)** | **Product technical specification (PTS)** |
| External appearance at the temperature of (20÷25)°C (*visual inspection*) | viscous liquid |
| Color on the Gardner scale at (20÷25)°C (*PN-EN ISO 4630-1: 2006)* | max 2 |
| Acid value (up to the second bend point), KOH mg/g | 50-70 |
| Water, %(m/m) *(PN-ISO 760:2001)* | max 1 |

The following example illustrates the process of forming a phosphorus ester based on an alcohol other than the one in the previous examples. The ethoxylated tristyrylphenol (CAS 99734-09-5) used in the example has an aromatic ring and a high molecular weight. The optimized process is suitable for alcohols of the general formula (1). The process was carried out as follows:
a) To a mixing reactor equipped with a frame stirrer with scrapers, a paddle stirrer and an additional homogenizing stirrer, ethoxylated tristyrylphenol (CAS 99734-09-5) was introduced in the amount corresponding to 75-90% of the maximum reactor charge of 2000 liters, and then the mixture was heated to 50°C.
b) The following stirrers were switched on:
   - the frame stirrer operating at a rotation frequency of 5 rpm
   - the paddle stirrer operating at a rotation frequency of 42 rpm
   - the homogenizing stirrer at a rotation frequency of 3000 rpm
c) Phosphinic acid in the amount of 0.3-0.5% (m/m) of the maximum reactor charge was added.
d) Phosphorus pentoxide in the amount corresponding to the molar ratio of 1:3 (phosphorus pentoxide:alkyl ether alcohol) was added to the reaction mass. Charging lasted 1 hour.
e) The operating parameters of the stirrers have been changed:
   - the frame stirrer operating at a rotation frequency of 23 rpm
   - the paddle stirrer operating at a rotation frequency of 42 rpm
   - the homogenizing stirrer at a rotation frequency of 1000 rpm
f) The temperature was raised to 80°C and the esterification process was carried out for 2 hours.
g) Demineralized water and hydrogen peroxide were added, each in the amount of 0.3-0.5% (m/m) of the charge and the heating was continued for 30 minutes. The mixing parameters have not changed.
h) The reaction mass was cooled to 30°C, then the stirrers were switched off and the reactor was discharged.

Result: The resulting product was in line with the expectations (Table 3). The external appearance was determined as a clear liquid, and the color was established as 0.8 degrees on the Gardner scale. The color measurement was performed by the spectrometric method according to the standard PN-EN ISO 4630-1: 2006. As with the use of ethoxylated alcohol C12-C14 (CAS 68439-50-9) and 2-ethylhexanol (CAS 104-76-7), a phosphorus ester based on a higher molecular weight alkyl ether alcohol can be successfully produced by the method described herein.

## Claims

1. A method for the preparation of phosphoric acid mono- and diesters by the reaction of alcohols with phosphorus pentoxide, comprising the following stesps:
a) phosphorus pentoxide is added to the reactor containing alcohol;
b) the reaction mixture is heated and the standardization process is carried out.
wherein:
the alcohol is selected from the group of alkyl alcohols, alkyl-aryl alcohols, alkyl ether alcohols or alkyl-aryl ether alcohols of the general formula (1): 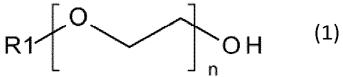
wherein:
**R1** - is a linear and/or branched hydrocarbon chain, optionally comprising an aromatic ring, with an average number of carbon atoms from 4 to 30;
n - is the average amount of ethylene oxide moles ranging from 0 to 18 moles; and
phosphoric acid mono- and diesters are compounds of the general formulae (2) and/or (3): 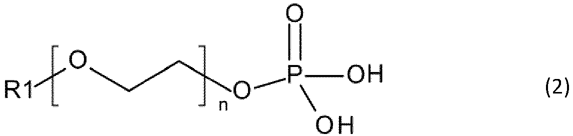 and/or 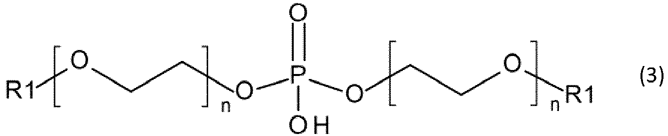
wherein:
**R1** - is a linear and/or branched hydrocarbon chain, optionally comprising an aromatic ring, with an average number of carbon atoms from 4 to 30;
**n** - is the average amount of ethylene oxide moles ranging from 0 to 18 moles
**characterized in that** the method of the invention is carried out in a mixing reactor equipped with a frame stirrer with scrapers, a paddle stirrer and an additional homogenizing stirrer, the method wherein:
in step a) the frame stirrer, the paddle stirrer and the homogenizing stirrer operate at different frequencies with respect to one another; and, in step b), the frame stirrer,
the paddle stirrer and the homogenizing stirrer operate at different frequencies with respect to one another and with different frequencies than in step a).

2. The method for the preparation of phosphoric acid mono- and diesters according to claim 1, **characterized in that** alcohol is used in the amount corresponding to 75-90% of the maximum reactor charge.

3. The method for the preparation of phosphoric acid mono- and diesters according to claim 2, **characterized in that** in step a), upon the introduction of alcohol into the reactor, the mixture is heated to the temperature of 50°C.

4. The method for the preparation of phosphoric acid mono- and diesters according to claim 3, **characterized in that** in step a), prior to the addition of phosphorus pentoxide, phosphinic acid in the amount of 0.3 to 0.5% of the maximum reactor charge is also added.

5. The method for the preparation of phosphoric acid mono- and diesters according to claim 4, **characterized in that** the phosphorus pentoxide in step a) is added within 1 to 2 hours, preferably within 1 hour.

6. The method for the preparation of phosphoric acid mono- and diesters according to claim 5, **characterized in that** in step a) the amount of added phosphorus pentoxide in the molar ratio to alcohol is 1:3.

7. The method for the preparation of phosphoric acid mono- and diesters according to claim 6, **characterized in that** in step a), upon the addition of phosphorus pentoxide, the reaction mixture is heated at the temperature of 80°C for 2.5 to 4 hours, preferably 2.5 hours.

8. The method for the preparation of phosphoric acid mono- and diesters according to claim 7, **characterized in that** step a) is carried out in the mixing rector, wherein the frame stirrer rotates at the frequency of 2-10 rpm, the paddle stirrer rotates at the frequency of 30-42 rpm, and the homogenizing stirrer operates at the frequency of 1500-3500 rpm.

9. The method for the preparation of phosphoric acid mono- and diesters according to claim 1 **characterized in that** in step b) demineralized water and hydrogen peroxide are added, each in the amount of 0.3 to 0.5% of the reactor charge.

10. The method for the preparation of phosphoric acid mono- and diesters according to claim 9, **characterized in that** step b) is carried out in the mixing rector, wherein the frame stirrer rotates at the frequency of 2-23 rpm, the paddle stirrer rotates at the frequency of 30-42 rpm, and the homogenizing stirrer operates at the frequency of 800-1500 rpm.

11. The method for the preparation of phosphoric acid mono- and diesters according to claim 10, **characterized in that** in step b) the reaction mixture is heated at the temperature 80°C for 30 min.

12. The method for the preparation of phosphoric acid mono- and diesters according to claim 1, **characterized in that** alcohol is the substance with the CAS number 68439-50-9 or 104-76-7 or 99734-09-5.

## Patentansprüche

1. Das Verfahren zur Herstellung von Phosphorsäure-mono- und -diestern durch die Reaktion von Alkoholen mit Phosphorpentoxid, umfassend die folgenden Schritte:
a) Phosphorpentoxid wird zu dem Reaktor gegeben, der den Alkohol enthält;
b) Reaktionsmischung wird erhitzt und der Standardisierungsprozess durchgeführt;
wobei:
der Alkohol aus der Gruppe der Alkylalkohole, Alkylarylalkohole, Alkyletheralkohole oder Alkylaryletheralkohole der allgemeinen Formel (1) ausgewählt wird: 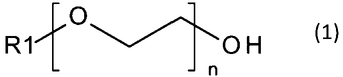
wobei:
**R1** - eine lineare und/oder verzweigte Kohlenwasserstoffkette ist, die optional einen aromatischen Ring aufweist, mit einer durchschnittlichen Anzahl von Kohlenstoffatomen von 4 bis 30;
**n** - die durchschnittliche Menge an Ethylenoxid-Molen im Bereich von 0 bis 18 Mol ist; und
Phosphorsäure-mono- und -diester Verbindungen der allgemeinen Formeln (2) sind und/oder (3): 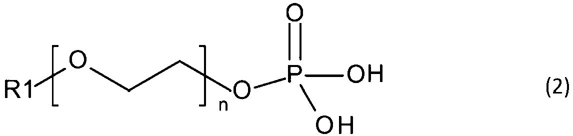 und/oder 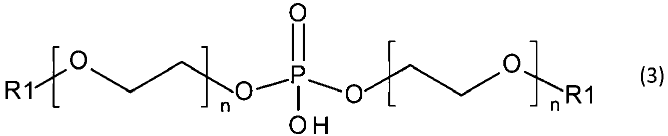
wobei:
**R1** - eine lineare und/oder verzweigte Kohlenwasserstoffkette ist, die optional einen aromatischen Ring aufweist, mit einer durchschnittlichen Anzahl von Kohlenstoffatomen von 4 bis 30;
**n** - die durchschnittliche Menge an Ethylenoxid-Molen im Bereich von 0 bis 18 Mol ist
**dadurch gekennzeichnet, dass** das erfindungsgemäße Verfahren in einem Mischreaktor durchgeführt wird, der mit einem Rahmenrührer mit Schabern, einem Blattrührer und einem zusätzlichen Homogenisierungsrührer ausgestattet ist, wobei das Verfahren:
in Schritt a) der Rahmenrührer, der Blattrührer und der Homogenisierungsrührer mit unterschiedlichen Frequenzen zueinander arbeiten; und in Schritt b) der Rahmenrührer, der Blattrührer und der Homogenisierungsrührer mit unterschiedlichen Frequenzen zueinander und mit unterschiedlichen Frequenzen als in Schritt a) arbeiten.

2. Das Verfahren zur Herstellung von Phosphorsäure-mono- und -diestern nach Anspruch 1, **dadurch gekennzeichnet, dass** Alkohol in einer Menge verwendet wird, die 75-90 % der maximalen Reaktorbeschickung entspricht.

3. Das Verfahren zur Herstellung von Phosphorsäure-mono- und -diestern nach Anspruch 2, **dadurch gekennzeichnet, dass** in Schritt a) beim Einleiten von Alkohol in den Reaktor die Mischung auf die Temperatur von 50 °C erhitzt wird.

4. Das Verfahren zur Herstellung von Phosphorsäure-mono- und -diestern nach Anspruch 3, **dadurch gekennzeichnet, dass** in Schritt a) vor der Zugabe von Phosphorpentoxid auch Phosphinsäure in einer Menge von 0,3 bis 0,5 % der maximalen Reaktorbeschickung zugegeben wird.

5. Das Verfahren zur Herstellung von Phosphorsäure-mono- und -diestern nach Anspruch 4, **dadurch gekennzeichnet, dass** das Phosphorpentoxid in Schritt a) innerhalb von 1 bis 2 Stunden, vorzugsweise innerhalb von 1 Stunde, zugegeben wird.

6. Das Verfahren zur Herstellung von Phosphorsäure-mono- und -diestern nach Anspruch 5, **dadurch gekennzeichnet, dass** in Schritt a) die Menge an zugesetztem Phosphorpentoxid im molaren Verhältnis zu Alkohol 1:3 beträgt.

7. Das Verfahren zur Herstellung von Phosphorsäure-mono- und -diestern nach Anspruch 6, **dadurch gekennzeichnet, dass** in Schritt a) das Reaktionsgemisch nach Zugabe von Phosphorpentoxid für 2,5 bis 4 Stunden, vorzugsweise 2,5 Stunden, auf die Temperatur von 80°C erhitzt wird.

8. Das Verfahren zur Herstellung von Phosphorsäure-mono- und -diestern nach Anspruch 7, **dadurch gekennzeichnet, dass** Schritt a) in dem Mischreaktor durchgeführt wird, wobei der Rahmenrührer mit der Frequenz von 2-10 U/min rotiert, der Blattrührer mit der Frequenz von 30-42 U/min rotiert und der Homogenisierungsrührer mit der Frequenz von 1500-3500 U/min arbeitet.

9. Das Verfahren zur Herstellung von Phosphorsäure-mono- und -diestern nach Anspruch 1, **dadurch gekennzeichnet, dass** in Schritt b) demineralisiertes Wasser und Wasserstoffperoxid in einer Menge von jeweils 0,3 bis 0,5 % der Reaktorbeschickung zugegeben werden.

10. Das Verfahren zur Herstellung von Phosphorsäure-mono- und -diestern nach Anspruch 9, **dadurch gekennzeichnet, dass** Schritt b) im Mischreaktor durchgeführt wird, wobei der Rahmenrührer mit der Frequenz von 2-23 U/min rotiert, der Blattrührer mit der Frequenz von 30-42 U/min rotiert und der Homogenisierungsrührer mit der Frequenz von 800-1500 U/min arbeitet.

11. Das Verfahren zur Herstellung von Phosphorsäure-mono- und -diestern nach Anspruch 10, **dadurch gekennzeichnet, dass** in Schritt b) das Reaktionsgemisch 30 min auf die Temperatur 80 °C erhitzt wird.

12. Das Verfahren zur Herstellung von Phosphorsäure-mono- und -diestern nach Anspruch 1, **dadurch gekennzeichnet, dass** Alkohol die Substanz mit der CAS-Nummer 68439-50-9 oder 104-76-7 oder 99734-09-5 ist.

## Revendications

1. Procédé de fabrication des mono et diesters d'acide phosphorique par la réaction des alcools avec le pentoxyde de phosphore, comprenant des étapes suivantes :
a) Le pentoxyde de phosphore est ajouté à un réacteur contenante d'alcool
b) Le mélange réactionnel est chauffé et le procédé de standardisation est effectué.
dans lequel :
l'alcool est choisi parmi le groupe des alcools alkyliques, des alcools d'alkylaryle, des alcools d'alkyléther ou des alcools d'alkylaryle éther de formule général (1) : 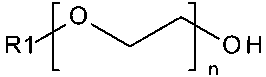
dans lequel :
**R1** - est un hydrocarbure à chaîne linéaire et/ou ramifiée, éventuellement comprenant un noyau aromatique, avec un nombre moyen des atomes de carbone étant de 4 à 30 ;
**n** - est une quantité moyenne des moles de l'oxyde d'éthylène comprise entre 0 à 18 moles ; et 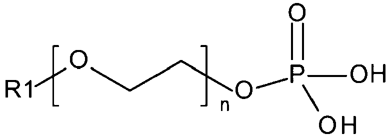 and/or 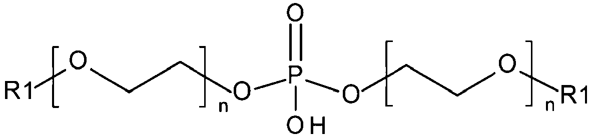
des mono- et diesters d'acide phosphorique sont des composés des formules générales (2) et/ou (3) :
dans lequel :
**R1** - est un hydrocarbure à chaîne linéaire et/ou ramifiée, éventuellement comprenant un noyau aromatique, avec un nombre moyen des atomes de carbone étant de 4 à 30 ;
**n** - est une quantité moyenne des moles de l'oxyde d'éthylène comprise entre 0 à 18 moles ;
**caractérisé en ce que** le procédé selon l'invention est effectué dans un réacteur mélangeur muni d'un agitateur à cadre avec des racleurs, un agitateur à palette et un agitateur à homogénéiser supplémentaire, le procédé dans lequel :
à l'étape a) l'agitateur à cadre, l'agitateur à palette et l'agitateur à homogénéiser fonctionnent à des fréquences différentes par rapport l'un à l'autre ; et à l'étape b), l'agitateur à cadre, l'agitateur à palette et l'agitateur à homogénéiser fonctionnent à des fréquences différentes par rapport l'un à l'autre et à des fréquences différentes de celles à l'étape a).

2. Procédé de fabrication des mono et diesters d'acide phosphorique selon la revendication 1, **caractérisé en ce que** l'alcool est utilisé d'un montant correspondant à 75-90% de la charge maximale du réacteur.

3. Procédé de fabrication des mono et diesters d'acide phosphorique selon la revendication 2, **caractérisé en ce qu'à** l'étape a), lors de l'introduction d'alcool dans le réacteur, le mélange est chauffé à la température de 50°C.

4. Procédé de fabrication des mono et diesters d'acide phosphorique selon la revendication 3, **caractérisé en ce qu'à** l'étape a), avant de l'ajout du pentoxyde de phosphore, l'acide hypophosphoreux à hauteur de 0,3 et à 0,5% de la charge maximale du réacteur est également ajouté.

5. Procédé de fabrication des mono et diesters d'acide phosphorique selon la revendication 4, **caractérisé en ce que** le pentoxyde de phosphore à l'étape a) est ajouté dans un délais d'une heure ou deux heures, avantageusement dans un délais d'une heure.

6. Procédé de fabrication des mono et diesters d'acide phosphorique selon la revendication 5, **caractérisé en ce qu'à** l'étape a), la quantité du pentoxyde de phosphore ajouté dans le rapport molaire avec l'alcool est égal à 1:3.

7. Procédé de fabrication des mono et diesters d'acide phosphorique selon la revendication 6, **caractérisé en ce qu'à** l'étape a), lors de l'ajout du pentoxyde de phosphore, le mélange réactionnel est chauffé à la température de 80°C pour la durée de 2,5 à 4 heures, avantageusement 2,5 heures.

8. Procédé de fabrication des mono et diesters d'acide phosphorique selon la revendication 7, **caractérisé en ce que** l'étape a) est effectuée dans le réacteur mélangeur, dans lequel l'agitateur à cadre tourne à la fréquence de 2-10 tr/min, l'agitateur à palette tourne à la fréquence de 30-42 tr/min, et l'agitateur à homogénéiser fonctionne à la fréquence de 1500-3500 tr/min.

9. Procédé de fabrication des mono et diesters d'acide phosphorique selon la revendication 1, **caractérisé en ce qu'à** l'étape b), l'eau déminéralisée et le peroxyde d'hydrogène sont ajoutés, chaque à hauteur de 0,3 à 0,5% de la charge du réacteur.

10. Procédé de fabrication des mono et diesters d'acide phosphorique selon la revendication 9, **caractérisé en ce que** l'étape b) est effectuée dans le réacteur mélangeur, dans lequel l'agitateur à cadre tourne à la fréquence de 2-23 tr/min, l'agitateur à palette tourne à la fréquence de 30-42 tr/min, et l'agitateur à homogénéiser fonctionne à la fréquence de 800-1500 tr/min.

11. Procédé de fabrication des mono et diesters d'acide phosphorique selon la revendication 10, **caractérisé en ce qu'à** l'étape b) le mélange réactionnel est chauffé à la température de 80°C pour 30 minutes.

12. Procédé de fabrication des mono et diesters d'acide phosphorique selon la revendication 1, **caractérisé en ce qu'à** l'étape b), l'alcool est la substance de numéro CAS 68439-50-9 ou 104-76-7 ou 99734-09-5.
